# EUROPEAN PATENT APPLICATION

(11) **EP 2 365 385 A1**
(43) Date of publication of application: **14.09.2011**
(21) Application number: 11153624.9
(22) Date of filing: 08.02.2011
(51) Int. Cl.: G02F 1/1339, G02F 1/1337

(54) **Liquid crystal display with improved bonding strength between the sealant and the substrate**

(30) Priority: 10.03.2010 KR 20100021262
(71) Applicant: Samsung Mobile Display Co., Ltd., Yongin-city, Gyunggi-do 446-711 (KR)
(72) Inventor: Kang, Myung-Koo, Chungcheongnam-do (KR)
(74) Representative: Walaski, Jan Filip

(57) **Abstract**

A liquid crystal display including: a first substrate (110) on which a first electrode (115) and a first orientation layer (116) are formed; a second substrate (120) facing the first substrate (110) and including a second electrode (123) and a second orientation layer (124); a sealant (160) formed along edges of the first substrate (110) and the second substrate (120); and a liquid crystal layer (130) between the first electrode (115) and the second electrode (123); wherein holes (116a,124a) are formed in the first and/or second orientation layers (116,124) and the sealant (160) is bonded to the first and/or second substrates (110,120) through the holes (116a,124a). Since a contact area between the sealant (160) and the substrates (110,120) is increased and a bonding force is improved, a stable sealing state can be maintained with a small area and a size of a non-pixel region (D) is reduced so that a small-sized liquid crystal display can be achieved.

## Description

The present invention relates to a liquid crystal display device, particularly but not exclusively to a liquid crystal display device in which bonding force between a sealant and a substrate is improved.

A liquid crystal display (LCD) using an electro-optic property of a liquid crystal to display an image or text is widely used in view of excellent colour reproduction, low power consumption, and because the LCD can be manufactured to be thin. The LCD includes a display panel displaying an image and text, a drive integrated circuit (IC) driving the display panel, and a backlight unit providing light to the display panel.

The display panel includes a lower substrate on which a pixel electrode is formed, an upper substrate on which a common electrode is formed, a liquid crystal layer disposed between the pixel electrode and the common electrode. The liquid crystal layer is sealed by a sealant formed along an edge between the lower substrate and the upper substrate to seal a space between the pixel electrode and the common electrode. The sealant is formed in a non-pixel region around the pixel region. Recently, displays have become smaller according to user requirements. However, there are problems when reducing a size of the pixel region, so, research on minimizing a size of the non-pixel region is conducted in order to reduce the display size.

Aspects of the present invention provide a liquid crystal display being minimized by reducing a size of a non-pixel region.

Aspects of the present invention provide a liquid crystal display for maintaining a stable sealing state with a small area by improving a bonding force between a sealant and a substrate.

According to an aspect of the invention, there is provided a liquid crystal display comprising a first substrate including a first electrode and a first orientation layer, a second substrate facing the first substrate and including a second electrode and a second orientation layer, a sealant formed along edges of the first substrate and the second substrate and a liquid crystal layer between the first electrode and the second electrode, wherein the sealant is in contact with one or both of the first and second substrates through holes in one or both of the first and second orientation layers.

According to a further aspect of the present invention, there is provided a liquid crystal display which includes a first substrate on which a first electrode and a first orientation layer are formed; a second substrate facing the first substrate and including a second electrode and a second orientation layer; a sealant formed along edges of the first substrate and the second substrate; and a liquid crystal layer between the first electrode and the second electrode; wherein holes are formed in the first and second orientation layers and the sealant is bonded to the first and second subatrates through both side holes.

According to another aspect of the present invention, at least some of the orientation layer is disposed between the sealant and the substrate and the holes are formed in the first orientation layer and the second orientation layer between the sealant and the first substrate and the second substrate so that the sealant is bonded to the first substrate and the second substrate through the holes. Since a contact area between the sealant and the first substrate and the second substrate is increased and the bonding force is improved, a stable sealing state can be maintained with a small area. The size of the non-pixel region is effectively reduced so that a small liquid crystal display can be achieved.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings in which:
FIG. 1 is a perspective view illustrating a liquid crystal display according to an embodiment of the present invention;
FIG. 2 is a schematic perspective view illustrating a pixel region P of FIG. 1;
FIG. 3 is a sectional view taken along the line I1-I2 of FIG. 1;
FIG. 4 is an enlarged sectional view of an "X" portion of FIG. 3; and
FIGs. 5 and 6 are layout views illustrating an orientation layer and a sealant of FIG. 3.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

It is to be understood that where it is stated herein that a first element is said to be disposed or formed "on" or "in" or "connected to" a second element, the first element can directly contact the second element, or can be separated from the second element by one or more other elements located therebetween. In contrast, when an element is referred to as being disposed or formed "directly on" or "directly connected to" another element, there are no intervening elements present.

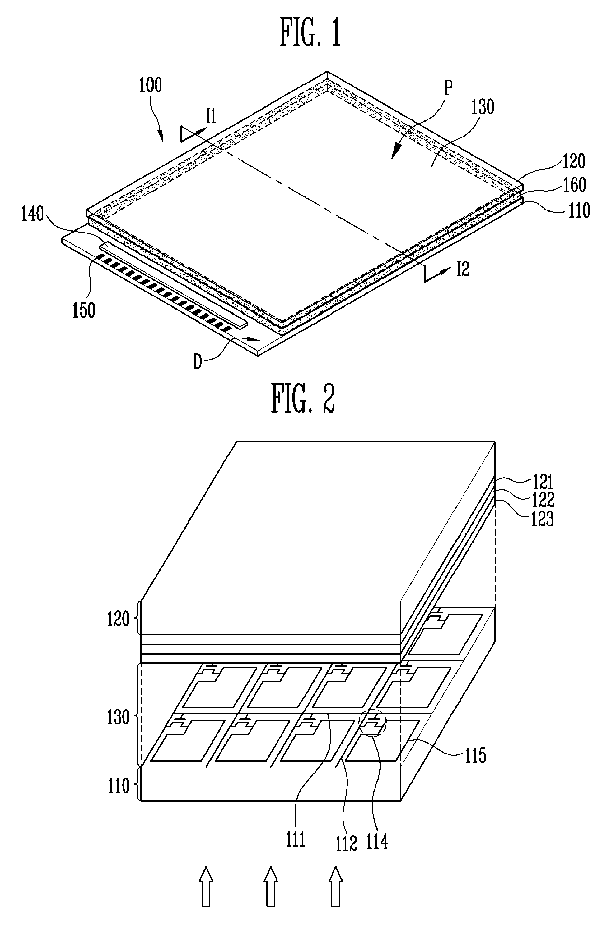

FIG. 1 is a perspective view illustrating a liquid crystal display according to an embodiment of the present invention. FIG. 2 is a schematic perspective view illustrating a pixel region P of FIG. 1. Referring to FIGs. 1 and 2, a liquid crystal display (LCD) 100 includes a lower substrate 110 and an upper substrate 120 that are disposed to face each other, and a liquid crystal layer 130 disposed between the lower substrate 110 and the upper substrate 120.

The lower substrate 110 includes a pixel region P and a non-pixel region D around the pixel region P. A plurality of gate lines 111 and data lines 112 are arranged in the form of matrix on the lower substrate 110 in the pixel region P. Pixels are defined by the gate lines 111 and the data lines 112 intersecting each other. Thin film transistors 114 control signals supplied to the respective pixels and pixel electrodes 115 connected to the thin film transistors 114. The thin film transistors 114 are made of a transparent material and are formed at portions where the gate lines 111 intersect the data lines 112. A pad unit 150 receiving a signal from the outside and a drive IC 140 driving the liquid crystal are mounted on the lower substrate 110 in the non-pixel region D. The drive IC 140 processes an electric signal provided from the outside through the pad unit 150 and provides the processed signal to the gate lines 111 and the data lines 112. A black matrix 121 preventing interference caused by light leakage and light of the respective pixels, a color filter 122 whose red color R, green color G, and blue color B are repeated corresponding to the respective pixels, and a common electrode 123 made of a transparent material, are formed on the upper substrate 120.

The lower substrate 110 and the upper substrate 120 are disposed to face each other and are bonded to each other by a sealant 160. A liquid crystal layer 130 is injected into a space sealed between the lower substrate 110 and the upper substrate 120. The liquid crystal layer 130 is disposed in the space between one of the pixel electrodes 115 and the common electrode 123 and is sealed by a sealant 160 along edges of the lower substrate 110 and the upper substrate 120. The sealant 160 is made of resin such as epoxy, phenol, and is formed in the non-pixel region to surround the pixel region P. However, aspects of the present invention are not limited thereto, and the sealant 160 may be formed of other suitable materials.

Although not illustrated in the drawings, polarizers (not shown) are installed at the rear sides of the lower substrate 110, the upper substrate 120 and a back light unit (not shown) as a light source is disposed at the rear side of the lower substrate 110. Therefore, light provided from the back light (not shown) enters the liquid crystal layer 130, is modulated by the liquid crystal oriented by voltages applied to the pixel electrode 115 and the common electrode 123, and is emitted to the outside through the upper substrate 120 to display text and an image.

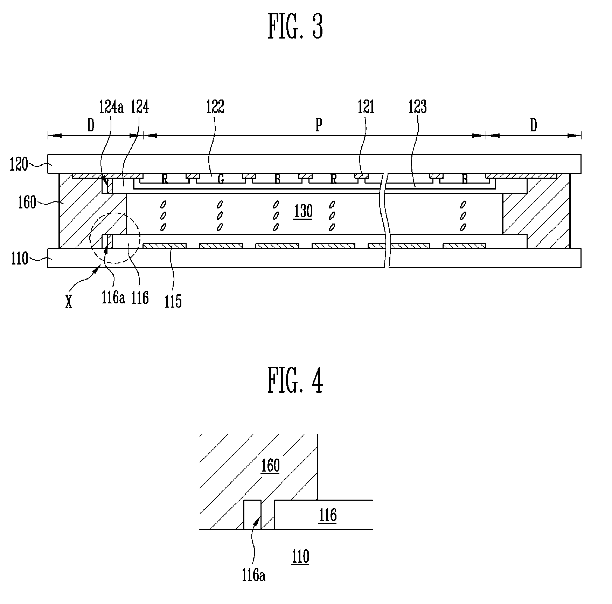

FIG. 3 is a sectional view taken along the line I1-I2 of FIG. 1. FIG. 4 is an enlarged sectional view of an "X" portion of FIG. 3. The embodiments of the present invention will be described in detail with reference to FIGs. 3 and 4. The liquid crystal layer 130 is disposed between an orientation layer 116 formed on the pixel electrode 115 and an orientation layer 124 formed on the common electrode 123.

The orientation layers 116 and 124 are rubbed such that a pretilt angle and an orientation of liquid crystal molecules are adjusted after coating. Since the pretilt angle and the orientation of liquid crystal molecules are adjusted, defects, such as light leakage, occur in the orientation layers 116 and 124 when the orientation layers 116 and 124 are not formed in the pixel region P. Therefore, the orientation layers 116 and 124 are coated to be wider than the pixel region P. In other words, the orientation layers 116 and 125 are coated to include a whole of the pixel region P and some of the non-pixel region D by considering the process margin.

However, since the orientation layers 116 and 124 have weak bonding force in bonding to the sealant 160, a contact area between the sealant 160 and the substrates 110 and 120 must be increased in consideration of the weak bonding force and therefore there is a limit on how much to reduce a size of the non-pixel region D. Therefore, the embodiments of the present invention coat and rub the orientation layers 116 and 124 and form holes 116a and 124a in the orientation layers 116 and 124 coated in the non-pixel region D. That, as illustrated in FIG. 4, the sealant 160 contacts the substrates 110 and 120 through the holes 116a and 124a formed on the orientation layers 116 and 124 so that the contact area between the sealant 160 and the substrates 110 and 120 is increased and the bonding force can be improved.

Since the size of the non-pixel region D is determined by a wire, an area occupied by the pad unit 150 and the drive IC 140, the process margin when coating the orientation layers 116 and 124, the contact area between the sealant 160 and the substrates 110 and 120, and a cutting margin separating a unit display panel are reduced and the size of the non-pixel region D can be effectively reduced. Thus, a stable sealing state can be maintained with a small area due to the improved bonding force between the sealant 160 and the substrates 110 and 120.

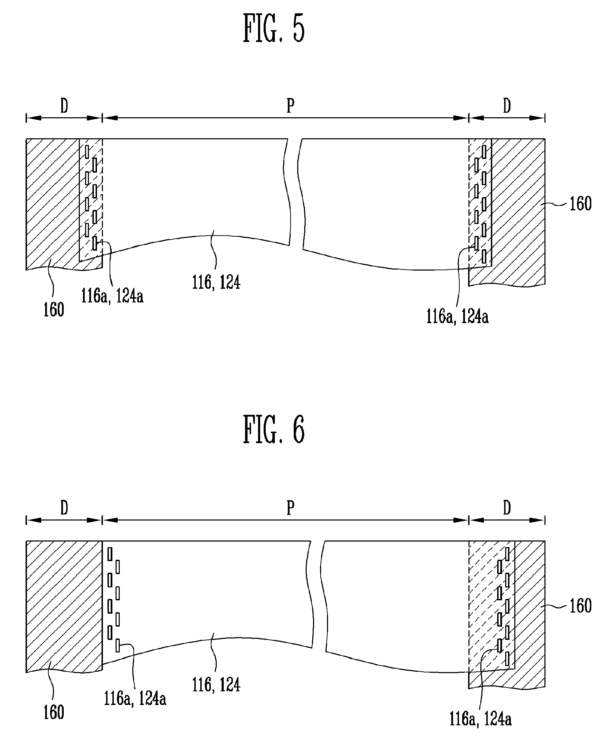

FIGs. 5 and 6 are layout views illustrating the orientation layers 116 and 126 and the sealant 160. The holes 116a and 124a of the orientation layers 116 and 124 are rectangular or circular and are arranged alternately. However, aspects of the present invention are not limited thereto, and the holes 116a and 124a may have other suitable shapes and be arranged in other suitable manners. The size of the holes 116a and 124a is smaller than the size of a unit pixel and an area occupied by overall holes 116a and 124a is 20 to 50% of a contact area with the sealant 160. For example, when the orientation layers 116 and 124 are 700nm, defects may be prevented during the patterning when the holes 116a and 124a are a few micrometers to a few tens of micrometers. Although FIGs. 5 and 6 illustrate a regular arrangement of the holes 116a and 124a, the holes 116a and 124a may be arranged irregularly to prevent light leakage from concentrating on a specific pixel.

FIG. 5 illustrates the orientation layers 116 and 124 formed in the whole of the pixel region P and some of the non-pixel region D. In this case, the sealant 160 contacts the substrates 110 and 120 through the holes 116a and 124a of orientation layers 116 and 124. FIG. 6 illustrates the holes 116a and 124a of the orientation layers 116 and 124 positioned in the pixel region P, rather than the non-pixel region D, due to a process error. However, since the holes 116a and 124a are arranged alternately and are smaller than the size of a unit pixel, the orientation of the liquid crystal layer 130 is not affected. That is, since another hole is not disposed around one of the holes 116a and 124a, the liquid crystal molecules are oriented by the orientation layers 116 and 124 around the holes 116a and 124a.

Although a few embodiments of the present invention have been shown and described, it would be appreciated by those skilled in the art that changes may be made in these embodiments without departing from the principles of the invention, the scope of which is defined in the claims.

## Claims

1. A liquid crystal display comprising:
a first substrate (110) including a first electrode (115) and a first orientation layer (116);
a second substrate (120) facing the first substrate and including a second electrode (123) and a second orientation layer (124);
a sealant (160) formed along edges of the first substrate and the second substrate; and
a liquid crystal layer (130) between the first electrode and the second electrode;
wherein the sealant is in contact with one or both of the first and second substrates through holes (116a, 124a) in one or both of the first and second orientation layers (116, 124).

2. The liquid crystal display as claimed in claim 1, wherein the holes are alternately arranged in adjacent lines.

3. The liquid crystal display as claimed in claim 1, wherein the holes are arranged in an irregular pattern.

4. The liquid crystal display as claimed in claim 1, 2 or 3, wherein the holes are rectangular or circular.

5. The liquid crystal display as claimed in any one of the preceding claims, wherein the holes are smaller than a unit pixel of the liquid crystal display.

6. The liquid crystal display as claimed in any one of the preceding claims, further comprising:
a thin film transistor connected to the first electrode; and
a first wire and a second wire connected to the thin film transistor and intersecting each other.

7. The liquid crystal display as claimed in any one of the preceding claims, further comprising:
black matrices formed on the second substrate; and
a colour filter formed between the black matrices.

8. The liquid crystal display as claimed in any one of the preceding claims, wherein the holes are disposed along the edges of the first substrate and the second substrate.

9. The liquid crystal display as claimed in any one of the preceding claims, wherein the first orientation layer and second orientation layer are coated and rubbed to adjust a pre-tilt angle and orientation of liquid crystal molecules of the liquid crystal layer.

10. The liquid crystal display as claimed in any one of the preceding claims, wherein the holes formed in the first orientation layer and the second orientation layer occupy 20% to 50% of a contact area between the sealant and the first substrate and the second substrate.
